# EUROPEAN PATENT APPLICATION

(11) **EP 4 848 367 A1**
(43) Date of publication of application: **02.12.2026**
(21) Application number: 26180984.2
(22) Date of filing: 26.05.2026
(51) Int. Cl.: H01M 4/38, H01M 4/04, H01M 4/36, H01M 4/46, H01M 4/62, H01M 4/134, H01M 10/0525

(54) **MANUFACTURING METHOD FOR ELECTRODE ACTIVE MATERIAL COMPOSITE PARTICLES, ELECTRODE ACTIVE MATERIAL COMPOSITE PARTICLE, ELECTRODE ACTIVE MATERIAL LAYER, AND BATTERY**

(30) Priority: 26.05.2025 JP 2025087403
(71) Applicant: Toyota Jidosha Kabushiki Kaisha, Toyota-shi, Aichi-ken 471-8571 (JP)
(72) Inventor: UCHIYAMA, Takayuki, Toyota-shi, 471-8571 (JP); SUGANUMA, Hikaru, Toyota-shi, 471-8571 (JP)
(74) Representative: D Young & Co LLP

(57) **Abstract**

A method of manufacturing electrode active material composite particles includes: (a) providing a composite in which silicon oxide is contained within pores of a porous carbon material; and (b) reducing the silicon oxide in the composite using a magnesium material to produce silicon and magnesium oxide. The electrode active material composite particles include the porous carbon material, the silicon held within the pores of the porous carbon material, and the magnesium oxide held within the pores of the porous carbon material. Here, a content of magnesium, measured by ICP analysis, is higher than or equal to 0.5 mass%, and/or a content of magnesium, measured by SEM-EDX, is higher than or equal to 0.15 mass%.

## Description

### BACKGROUND OF THE INVENTION

### 1. Field of the Invention

The disclosure relates to a manufacturing method for electrode active material composite particles, an electrode active material composite particle, an electrode active material layer, and a battery.

### 2. Description of Related Art

Japanese Unexamined Patent Application Publication No. 2024-073597 (JP 2024-073597 A) describes a composite that includes a porous carbon scaffold and silicon, and an electrode that includes such a composite. JP 2024-073597 A describes a method of embedding silicon within a porous carbon scaffold by chemical vapor deposition (CVD) technology using silane gas. JP 2024-073597 A describes the use of the material for lithium ion batteries.

Japanese Unexamined Patent Application Publication No. 2023-076283 (JP 2023-076283 A) describes a manufacturing method for porous silicon. The manufacturing method includes a reduction step of obtaining an intermediate product containing Si and MgO by bringing Mg vapor into contact with a raw material containing SiO₂ under reduced pressure and predetermined vapor pressure conditions, and a washing step of removing MgO from the intermediate product. JP 2023-076283 A illustrates a negative electrode material of an electrical storage device, such as a lithium ion secondary battery, as the use of porous silicon.

### SUMMARY OF THE INVENTION

A method of manufacturing a composite, as described in JP 2024-073597 A, desirably has high safety.

Incidentally, silicon serving as an electrode active material can expand and contract during charging and discharging of a battery. In such a composite as described in JP 2024-073597 A, the pores within a porous carbon material can mitigate the effects of expansion and contraction of silicon resulting from charging and discharging of a battery. For example, to more effectively mitigate the effects of such expansion and contraction in an electrode material containing silicon, it is presumably desirable that the electrode material have pores and also have a predetermined hardness.

The disclosure provides a manufacturing method for electrode active material composite particles with improved safety, an electrode active material composite particle having pores while maintaining a predetermined hardness, an electrode active material layer containing such electrode active material composite particles, and a battery having such an electrode active material layer.

A first aspect of the disclosure relates to a manufacturing method for electrode active material composite particles. The manufacturing method includes: (a) contacting an alkoxysilane with a porous carbon material to prepare a composite containing silicon oxide within pores of the porous carbon material, as a contacting step; and (b) reducing the silicon oxide in the composite using a magnesium material to produce silicon and magnesium oxide, as a reduction treatment step.

The manufacturing method according to the first aspect of the disclosure may further include, after the reduction treatment step (b), partially removing the magnesium oxide.

In the manufacturing method according to the first aspect of the disclosure, in the contacting step (a), the silicon oxide may be produced by chemical vapor deposition.

In the manufacturing method according to the first aspect of the disclosure, the alkoxysilane may be tetraethoxysilane.

A second aspect of the disclosure relates to an electrode active material composite particle. The electrode active material composite particle include: a porous carbon material; silicon held within pores of the porous carbon material; and magnesium oxide held within the pores of the porous carbon material. A content of magnesium in a plurality of the electrode active material composite particles, measured by ICP analysis, is higher than or equal to 0.5 mass%, and/or a content of magnesium in the plurality of electrode active material composite particles, measured by SEM-EDX, is higher than or equal to 0.15 mass%.

In the electrode active material composite particle according to the second aspect of the disclosure, the content of magnesium in the plurality of electrode active material composite particles, measured by ICP analysis, may be lower than or equal to 30.0 mass%.

In the electrode active material composite particle according to the second aspect of the disclosure, the content of magnesium in the plurality of electrode active material composite particles, measured by ICP analysis, may be lower than or equal to 10.0 mass%.

In the electrode active material composite particle according to the second aspect of the disclosure, a hardness of the plurality of electrode active material composite particles, determined from a load-displacement curve, may range from 1.0 GPa to 5.0 GPa.

In the electrode active material composite particle according to the second aspect of the disclosure, a pore volume of the plurality of electrode active material composite particles, measured by a gas adsorption method, may range from 0.40 cc/g to 1.0 cc/g.

In the electrode active material composite particle according to the second aspect of the disclosure, the content of magnesium in the plurality of electrode active material composite particles, measured by SEM-EDX, may be lower than or equal to 1.0 mass%.

In the electrode active material composite particle according to the second aspect of the disclosure, the silicon may be porous silicon.

A third aspect of the disclosure relates to an electrode active material layer. The electrode active material layer includes a plurality of the electrode active material composite particles according to the second aspect of the disclosure.

A fourth aspect of the disclosure relates to a battery. The battery includes the electrode active material layer according to the third aspect of the disclosure; and an electrolyte layer.

In the battery according to the fourth aspect of the disclosure, the battery may be a solid-state battery, and the electrolyte layer may contain a solid electrolyte.

The aspects of the disclosure provide a manufacturing method for electrode active material composite particles with improved safety, an electrode active material composite particle having pores while maintaining a predetermined hardness, an electrode active material layer containing such electrode active material composite particles, and a battery having such an electrode active material layer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic cross-sectional view that shows an example of a battery of the disclosure;
FIG. 2 is a graph that shows the relationship between the content of Mg in electrode active material composite particles of the disclosure and the hardness and pore volume of the electrode active material composite particles;
FIG. 3 is a cross-sectional secondary electron image of the electrode active material composite particles of the disclosure, captured by SEM; and
FIG. 4 is a cross-sectional image of the electrode active material composite particles of the disclosure, obtained by elemental mapping using EDX.

### DETAILED DESCRIPTION OF EMBODIMENTS

Hereinafter, an embodiment of the disclosure will be described in detail. The disclosure is not limited to the following embodiment, and various modifications may be implemented within the scope of the purport of the disclosure.

### Manufacturing Method for Electrode Active Material Composite Particles

A method of manufacturing electrode active material composite particles according to the disclosure includes: (a) contacting an alkoxysilane with a porous carbon material to prepare a composite containing silicon oxide within pores of the porous carbon material; and (b) reducing the silicon oxide in the composite using a magnesium material to produce silicon and magnesium oxide. Step (a) may be referred to as a contacting step, and step (b) may be referred to as a reduction treatment step.

The disclosers of the present application have found that electrode active material composite particles can be manufactured by a method with improved safety. In other words, in the method of this disclosure, an alkoxysilane is used as a silicon source, so it is safer than the method that uses silane gas as described in JP 2024-073597 A.

In the disclosure, the "electrode active material composite particles" may be simply referred to as "composite particles".

Hereinafter, the method of the disclosure for manufacturing electrode active material composite particles will be described in more detail.

### Preparation of Composite

The method of the disclosure includes (a) contacting an alkoxysilane with a porous carbon material to prepare a composite containing silicon oxide within pores of the porous carbon material. In the disclosure, the "silicon oxide" may be silicon dioxide (SiO₂).

In the method of the disclosure, in step (a), the silicon oxide may be produced by chemical vapor deposition (CVD). Specifically, for example, the following method is used. In other words, initially, a porous carbon material is put into the core tube of a CVD apparatus, the pressure inside the core tube is reduced, and then the porous carbon material is heated. Subsequently, an oxygen line is inserted into a container containing an alkoxysilane, the alkoxysilane is bubbled with oxygen, and the oxygen containing alkoxysilane vapor is introduced into the core tube. By maintaining this state, it is possible to prepare a composite containing SiO₂ within the pores of the porous carbon material.

The alkoxysilane is not limited and may be, for example, a tetraalkoxysilane, or may be an alkoxysilane having substituents other than alkoxy groups.

The tetraalkoxysilane is not limited and may be, for example, tetramethoxysilane, tetraethoxysilane, tetrapropoxysilane, tetrabutoxysilane, or a combination of these materials. In particular, the tetraalkoxysilane may be tetraethoxysilane.

The alkoxysilane having substituents other than alkoxy groups is not limited. The substituents other than alkoxy groups are not limited. Examples of the substituents include alkyl groups, such as methyl groups and ethyl groups, phenyl groups, and vinyl groups. The alkoxy groups are not limited. Examples of the alkoxy groups include methoxy groups and ethoxy groups. The number of substituents other than alkoxy groups and the number of alkoxy groups are not limited. Examples of alkoxysilanes having substituents other than alkoxy groups, specifically, include methyltrimethoxysilane and phenyltrimethoxysilane.

The heating temperature is not limited and may be, for example, higher than or equal to 100°C, may be higher than or equal to 300°C, may be higher than or equal to 400°C, or may be higher than or equal to 500°C, and may be lower than or equal to 1000°C, may be lower than or equal to 800°C, may be lower than or equal to 600°C, or may be lower than or equal to 500°C.

The time for maintaining the state where oxygen containing alkoxysilane vapor is introduced into the core tube is not limited, and may be, for example, longer than or equal to one hour, may be longer than or equal to three hours, may be longer than or equal to five hours, or may be longer than or equal to six hours, and may be shorter than or equal to 30 hours, may be shorter than or equal to 20 hours, may be shorter than or equal to 15 hours, may be shorter than or equal to 10 hours, may be shorter than or equal to eight hours, or may be shorter than or equal to six hours.

### Reduction of Silicon Oxide

The method of the disclosure includes (b) reducing the silicon oxide (SiO₂) in the composite using a magnesium (Mg) material to produce silicon (Si) and magnesium oxide (MgO).

A method of reducing SiO₂ using an Mg material is not limited, and a method of contacting Mg vapor with the composite is illustrated. A method of generating Mg vapor is not limited, and a method of heating a reducing agent that becomes an Mg source, such as Mg alloys and metal Mg, is illustrated.

The Mg alloy is not limited and may be at least one selected from the group consisting of Mg₂Si, MgCa, MgCu₂, MgNi₂, and MgSn.

A pressure for reducing SiO₂ using an Mg material is not limited. The pressure may be, for example, lower than one atmosphere, may be lower than or equal to 100 Pa, or may be lower than or equal to 20 Pa. The pressure may be, for example, an Mg vapor pressure lower than or equal to an equilibrium pressure of a reversible decomposition reaction that decomposes Mg₂Si into Mg vapor and Si.

The temperature for reducing SiO₂ using an Mg material is not limited and may be, for example, higher than or equal to 500°C, may be higher than or equal to 600°C, or may be higher than or equal to 650°C, and may be lower than or equal to 900°C, may be lower than or equal to 800°C, may be lower than or equal to 700°C, or may be lower than or equal to 650°C.

The time for reducing SiO₂ using an Mg material is not limited and may be, for example, longer than or equal to one hour, may be longer than or equal to three hours, may be longer than or equal to five hours, or may be longer than or equal to 10 hours, and may be shorter than or equal to 30 hours, may be shorter than or equal to 20 hours, may be shorter than or equal to 15 hours, or may be shorter than or equal to 10 hours.

The amount of Mg source may be greater than or equal to an amount by which Mg vapor in an amount with which SiO₂ can be appropriately reduced, that is, one molar equivalent or greater relative to the number of moles of SiO₂.

The mass fraction of the Mg source relative to the composite is not limited as long as the Mg source can appropriately reduce SiO₂. The mass fraction may be, for example, higher than or equal to 1, may be higher than or equal to 2, or may be higher than or equal to 2.5, and may be lower than or equal to 10, may be lower than or equal to 5, or may be lower than or equal to 2.5.

The following methods are, for example, used as a specific method of step (b). In other words, initially, a composite and an Mg source are put into a reaction vessel. Subsequently, the reaction vessel is placed in a vacuum furnace, and the inside of the vacuum furnace is evacuated with a rotary pump while the temperature is increased to perform heating.

### Partial Removal of Magnesium Oxide

The method of the disclosure may further include partially removing magnesium oxide after step (b). When MgO is removed, voids are formed between Si and the porous carbon material in the pores of the porous carbon material, filled with Si, and the Si in the electrode active material composite particles becomes porous, with the result that porous silicon is produced. In addition to the pores in the porous carbon material, the voids and the pores in the silicon can effectively mitigate the effects of the expansion and contraction of silicon resulting from charging and discharging of a battery.

A method of partially removing MgO is not limited and is, for example, a method of performing treatment with an acid.

The method of performing treatment with an acid is not limited and is, for example, a method of mixing the electrode active material composite particles before acid treatment with an acid.

The acid is not limited. Examples of the acid include inorganic acids, such as hydrochloric acid, nitric acid, and sulfuric acid.

The concentration of the acid may be higher than or equal to 0.1 mass%, may be higher than or equal to 3 mass%, may be higher than or equal to 5 mass%, may be higher than or equal to 10 mass%, may be higher than or equal to 15 mass%, may be higher than or equal to 20 mass%, may be higher than or equal to 25 mass%, or may be higher than or equal to 30 mass%, and may be lower than or equal to 50 mass%, may be lower than or equal to 40 mass%, may be lower than or equal to 35 mass%, may be lower than or equal to 30 mass%, may be lower than or equal to 25 mass%, may be lower than or equal to 20 mass%, may be lower than or equal to 15 mass%, may be lower than or equal to 10 mass%, may be lower than or equal to 5 mass%, or may be lower than or equal to 3 mass%.

When MgO is removed by using an acid, the above method may further include washing the electrode active material composite particles with water, alcohol, or the like, and drying the electrode active material composite particles.

### Electrode Active Material Composite Particles

The electrode active material composite particles of the disclosure include a porous carbon material, silicon held within the pores of the porous carbon material, and magnesium oxide held within the pores of the porous carbon material. Here, the content of magnesium, measured by ICP analysis, is higher than or equal to 0.5 mass%, and/or the content of magnesium, measured by SEM-EDX, is higher than or equal to 0.15 mass%.

The disclosers of the present application have found that the electrode active material composite particles of the disclosure have pores with a predetermined hardness. This is presumably due to the fact that, during a manufacturing process of the composite particles, the magnesium material that is used in the reduction treatment and held in the pores of the porous carbon material becomes magnesium oxide and remains in the composite particles.

The composite particles of the disclosure can mitigate the effects of expansion and contraction of silicon resulting from charging and discharging of a battery due to the pores in the porous carbon material.

The composite particles of the disclosure contain a predetermined amount or more of relatively hard magnesium oxide within the porous carbon material. It is believed that, for example, the magnesium oxide can function as a pillar against intended or unintended external stress during the manufacturing of a battery. As a result, collapsing of the pores within the porous carbon material can be suppressed, so it is believed to contribute to mitigating the effects of expansion and contraction of silicon.

In the disclosure, "hardness" means a "hardness determined from a load-displacement curve". The "hardness obtained from the load-displacement curve will be described later.

Hereinafter, the component elements that can constitute the electrode active material composite particles of the disclosure will be described.

### Porous Carbon Material

The electrode active material composite particles of the disclosure include a porous carbon material. The porous carbon material holds silicon and magnesium oxide within the pores thereof.

The porous carbon material is not limited. The porous carbon material may be, for example, activated carbon. The porous carbon material may be a material that has communication holes formed of connected pores. Examples of such materials include commercially available Knobel (registered trademark) MH-00.

The pore size and pore volume of the porous carbon material are not limited.

### Silicon

The electrode active material composite particles of the disclosure include silicon held within the pores of the porous carbon material. The silicon functions as an electrode active material and causes a battery to expand and contract during charging and discharging.

The silicon is not limited and may be, for example, produced by using an alkoxysilane through the above-described method.

The shape and size of the silicon are not limited as long as the silicon functions as the electrode active material.

The silicon may be porous silicon. In other words, the silicon may have a plurality of pores. With this configuration, it is possible to mitigate the effects of expansion and contraction of silicon not only through the pores within the porous carbon material but also through the pores of the porous silicon. The number of pores, pore volume, pore size, and the like, of the porous silicon are not limited, and may be set as needed in consideration of the magnitude of expansion and contraction of silicon. The pore size may, for example, be on the order of nanometers. The pores of the porous silicon may be formed, for example, by partially removing magnesium oxide as described above.

In the electrode active material composite particles of the disclosure, the mass fraction of the silicon to the porous carbon material may range from 0.1 to 10.0. The mass fraction may be higher than or equal to 0.1, may be higher than or equal to 0.3, may be higher than or equal to 0.5, may be higher than or equal to 0.7, may be higher than or equal to 0.9, or may be higher than or equal to 1.0, and may be lower than or equal to 10.0, may be lower than or equal to 7.0, may be lower than or equal to 5.0, may be lower than or equal to 3.0, may be lower than or equal to 2.0, or may be lower than or equal to 1.0. In other words, the mass ratio between the silicon and the porous carbon material may be 1:1.

### Content of Magnesium, Measured by ICP Analysis

In the electrode active material composite particles of the disclosure, the content of magnesium, measured by ICP analysis, is higher than or equal to 0.5 mass%. As a result, the composite particles have pores while having a predetermined hardness.

The content of magnesium, measured by ICP analysis, may range from 0.5 mass% to 40.0 mass%, or may range from 1.0 mass% to 40.0 mass%. The content may be higher than or equal to 1.0 mass%, may be higher than or equal to 2 mass%, may be higher than or equal to 5.0 mass%, may be higher than or equal to 10.0 mass%, may be higher than or equal to 20.0 mass%, may be higher than or equal to 30.0 mass%, or may be higher than or equal to 35.0 mass%, and may be lower than or equal to 40.0 mass%, may be lower than or equal to 30.0 mass%, may be lower than or equal to 25.0 mass%, may be lower than or equal to 20.0 mass%, may be lower than or equal to 15.0 mass%, may be lower than or equal to 10.0 mass%, may be lower than or equal to 5.0 mass%, may be lower than or equal to 2.5 mass%, may be lower than or equal to 2.0 mass%, or may be lower than or equal to 1.5 mass%.

The content of magnesium, measured by ICP analysis, may be higher than or equal to 0.5 mass% and lower than or equal to 10.0 mass%, may be higher than or equal to 0.5 mass% and lower than or equal to 5.0 mass%, may be higher than or equal to 0.5 mass% and lower than or equal to 2.5 mass%, or may be higher than or equal to 1.0 mass% and lower than or equal to 2.5 mass%, from the viewpoint of increasing the pore volume of the electrode active material composite particles. The content may be higher than or equal to 1.0 mass%, may be higher than or equal to 1.2 mass%, may be higher than or equal to 1.5 mass%, or may be higher than or equal to 2.0 mass%, and may be lower than or equal to 10.0 mass%, may be lower than or equal to 5.0 mass%, may be lower than or equal to 3.0 mass%, may be lower than or equal to 2.5 mass%, may be lower than or equal to 2.0 mass%, may be lower than or equal to 1.5 mass%, or may be lower than or equal to 1.3 mass%.

The content of magnesium, measured by ICP analysis, may range from 5.0 mass% to 40.0 mass%, may range from 10.0 mass% to 40.0 mass%, or may range from 20.0 mass% to 40.0 mass%, from the viewpoint of increasing the hardness of the electrode active material composite particles. The content may be higher than or equal to 5.0 mass%, may be higher than or equal to 10.0 mass%, may be higher than or equal to 15.0 mass%, may be higher than or equal to 20.0 mass%, may be higher than or equal to 25.0 mass%, may be higher than or equal to 30.0 mass%, or may be higher than or equal to 35.0 mass%, and may be lower than or equal to 40.0 mass%, may be lower than or equal to 35.0 mass%, or may be lower than or equal to 30.0 mass%.

The content of magnesium in the electrode active material composite particles can be measured by performing high-frequency inductive coupling plasma (ICP) analysis according to an existing method using PS3520UVDDII (manufactured by Hitachi High-Tech Science Corporation).

### Hardness Determined from Load-Displacement Curve

The hardness determined from the load-displacement curve is approximately proportional to the content of Mg in the electrode active material composite particles.

The hardness may range from 1.0 GPa to 15.0 GPa, may range from 1.0 GPa to 10.0 GPa, may range from 1.0 GPa to 5.0 GPa, may range from 1.0 GPa to 3.0 GPa, or may range from 1.5 GPa to 2.5 GPa, in view of the balance with the pore volume (described later). The hardness may be higher than or equal to 0.5 GPa, may be higher than or equal to 1.0 GPa, may be higher than or equal to 1.5 GPa, or may be higher than or equal to 2.0 GPa, and may be lower than or equal to 15.0 GPa, may be lower than or equal to 10.0 GPa, may be lower than or equal to 5.0 GPa, may be lower than or equal to 3.0 GPa, may be lower than or equal to 2.5 GPa, or may be lower than or equal to 2.0 GPa.

The hardness determined from the load-displacement curve can be determined from the obtained load-displacement curve using a nanoindentation measuring device TI980 TriboIndenter (manufactured by Bruker Corporation).

The pore volume measured by a gas adsorption method increases with a decrease in the content of Mg in the electrode active material composite particles. Particularly, the pore volume remarkably increases in the electrode active material composite particles of which the content of Mg is less than or equal to a predetermined amount.

The pore volume may range from 0.10 cc/g to 1.0 cc/g, may range from 0.25 cc/g to 1.0 cc/g, or may range from 0.40 cc/g to 1.0 cc/g. The pore volume may be greater than or equal to 0.10 cc/g, may be greater than or equal to 0.25 cc/g, may be greater than or equal to 0.40 cc/g, may be greater than or equal to 0.50 cc/g, may be greater than or equal to 0.60 cc/g, may be greater than or equal to 0.70 cc/g, or may be greater than or equal to 0.75 cc/g, and may be less than or equal to 1.0 cc/g, may be less than or equal to 0.80 cc/g, may be less than or equal to 0.70 cc/g, may be less than or equal to 0.60 cc/g, or may be less than or equal to 0.50 cc/g.

The gas adsorption method may be the following method. In other words, after an N₂ adsorption isotherm is measured, a cumulative pore size distribution and a differential pore size distribution can be obtained using the Barrett-Joyner-Halenda (BJH) method, and the pore volume can be determined from the obtained cumulative pore size distribution and differential pore size distribution. In this case, BELSORPMAXX that is a specific surface area and pore size distribution measuring device manufactured by Microtrac Inc. can be used.

In the disclosure, "pore volume" may mean the volume of pores within the porous carbon material, or may mean the volume of pores within the porous carbon material, the voids between Si and the porous carbon material, and/or the volume of pores within the porous silicon.

### Content of Magnesium, Measured by SEM-EDX

In the electrode active material composite particles of the disclosure, the content of magnesium, measured by SEM-EDX, is higher than or equal to 0.15 mass%. As a result, the composite particles have pores while having a predetermined hardness.

The content of magnesium, measured by SEM-EDX, may range from 0.15 mass% to 0.50 mass%, may range from 0.15 mass% to 0.40 mass%, or may range from 0.20 mass% to 0.30 mass%. The content may be higher than or equal to 0.16 mass%, may be higher than or equal to 0.18 mass%, may be higher than or equal to 0.20 mass%, may be higher than or equal to 0.22 mass%, or may be higher than or equal to 0.24 mass%, and may be lower than or equal to 1.0 mass%, may be lower than or equal to 0.80 mass%, may be lower than or equal to 0.60 mass%, may be lower than or equal to 0.40 mass%, may be lower than or equal to 0.30 mass%, or may be lower than or equal to 0.25 mass%.

Measurement of the content of Mg using scanning electron microscope energy dispersive X-ray spectroscopy (SEM/EDX) can be performed as follows. In other words, a scanning electron microscope (SEM) is used to obtain a cross-sectional secondary electron image of the electrode active material composite particles, and elemental mapping is performed on the obtained secondary electron image using an energy-dispersive X-ray analysis device (EDX). The content of Mg may be defined as the average value of values measured at four different points.

The electrode active material composite particles of the disclosure can be manufactured by the method of the disclosure for manufacturing electrode active material composite particles.

### Electrode Active Material Layer

The electrode active material layer of the disclosure contains the electrode active material composite particles of the disclosure. The electrode active material layer of the disclosure may optionally include a solid electrolyte, an electrically conductive agent, and a binder.

Hereinafter, the component elements that constitute the electrode active material layer of the disclosure will be described.

### Electrode Active Material Composite Particles

The above description can be referred to for the electrode active material composite particles.

The content of the electrode active material composite particles in the electrode active material layer is not limited and may be set as needed in consideration of the desired capacity or the like of a battery.

### Solid Electrolyte

Examples of the solid electrolyte include inorganic solid electrolytes, such as sulfide solid electrolytes, oxide solid electrolytes, nitride solid electrolytes, and halide solid electrolytes, and organic polymer electrolytes, such as polymer electrolytes. Particularly, the solid electrolyte may be a sulfide solid electrolyte.

For example, when the battery is a lithium ion secondary battery, the solid electrolyte may have lithium ion conductivity.

Examples of sulfide solid electrolytes having lithium ion conductivity include solid electrolytes that contain Li, X (X is at least one of P, As, Sb, Si, Ge, Sn, B, Al, Ga, and In), and S. The sulfide solid electrolyte may further contain at least one of O and halogen. Examples of the halogen include F, Cl, Br, and I.

Examples of the sulfide solid electrolyte include Li₂S-P₂S₅, Li₂S-P₂S₅-LiI, Li₂S-P₂S₅-GeS₂, Li₂S-P₂S₅-Li₂O, Li₂S-P₂S₅-Li₂O-LiI, Li₂S-P₂S₅-LiI-LiBr, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₕ (where m and n are positive numbers, and Z is any one of Ge, Zn, and Ga), Li₂S-GeS₂, Li₂S-SiS₂-Li₃PO₄, Li₂S-SiS₂-LiₓMO_{y} (where x and y are positive numbers, and M is any one of P, Si, Ge, B, Al, Ga, and In).

Examples of oxide solid electrolytes having lithium ion conductivity include solid electrolytes that contain Li, Y (Y is at least one of Nb, B, Al, Si, P, Ti, Zr, Mo, W, and S), and O. Specific examples include garnet-type solid electrolytes, such as Li₇La₃Zr₂O₁₂, Li₇₋ₓLa₃(Zr₂₋ₓNbₓ)O₁₂ (0 ≦ x ≦ 2), and Li₅La₃Nb₂O₁₂; perovskite-type solid electrolytes, such as (Li,La)TiO₃, (Li,La)NbO₃, and (Li,Sr)(Ta,Zr)O₃; NASICON-type solid electrolytes, such as Li(Al,Ti)(PO₄)₃ and Li(Al,Ga)(PO₄)₃; Li-P-O-based solid electrolytes, such as Li₃PO₄ and LIPON(a compound in which a part of O in Li₃PO₄ is substituted with N); and Li-B-O-based solid electrolytes, such as Li₃BO₃ and Li₃BO₃ (a compound in which a part of O is substituted with C).

The content of the solid electrolyte in the electrode active material layer is not limited and may be set as needed in consideration of a desired ion conductivity, or the like.

### Electrically Conductive Agent

Examples of the electrically conductive agent include a carbon material, metal particles, and combinations of these materials. Examples of the carbon material include non-fibrous carbon materials, such as acetylene black (AB) and Ketjen black (KB); fibrous carbon materials, such as vapor-grown carbon fiber (VGCF), carbon nanotubes (CNT), and carbon nanofibers (CNF); and combinations of these materials. Examples of the metal particles include nickel, copper, iron, stainless steel, and combinations of these materials.

The content of the electrically conductive agent in the electrode active material layer is not limited and may be set as needed in consideration of a desired conductivity, or the like.

### Binder

Examples of the binder include rubber-based binders, such as butadiene rubber, hydrogenated butadiene rubber, styrene-butadiene rubber (SBR), hydrogenated styrene-butadiene rubber, nitrile butadiene rubber, hydrogenated nitrile butadiene rubber, acrylate butadiene rubber (ABR), and ethylene-propylene rubber; fluoride-based binders, such as polyvinylidene fluoride (PVDF), polyvinylidene fluoride-hexafluoropropylene copolymer (PVDF-HFP), polytetrafluoroethylene, and fluorine rubber; polyolefin-based thermoplastic resins, such as polyethylene, polypropylene, and polystyrene; imide-based resins, such as polyimide and polyamide imide; amide-based resins, such as polyamide; acrylic resins, such as polymethyl acrylate and polyethyl acrylate; methacrylic resins, such as polymethyl methacrylate and polyethyl methacrylate, and combinations of these materials.

The content of the binder in the electrode active material layer is not limited and may be set as needed in consideration of a desired binding properties, or the like.

### Other Components

The electrode active material layer may contain additional components other than the above-described materials, or does not need to contain additional components.

### Manufacturing Method for Electrode Active Material Layer

Examples of a method of manufacturing an electrode active material layer include mixing constituent materials such as electrode active material composite particles to obtain an electrode composite, and forming the obtained electrode composite using dry forming or wet forming.

In the disclosure, the "electrode composite" means a composition that can constitute an electrode active material layer as it is or by further containing other components. In the disclosure, an "electrode composite slurry" means a slurry that includes a dispersion medium in addition to the "electrode composite" and, therefore, can be applied and dried to form an electrode active material layer.

### Battery

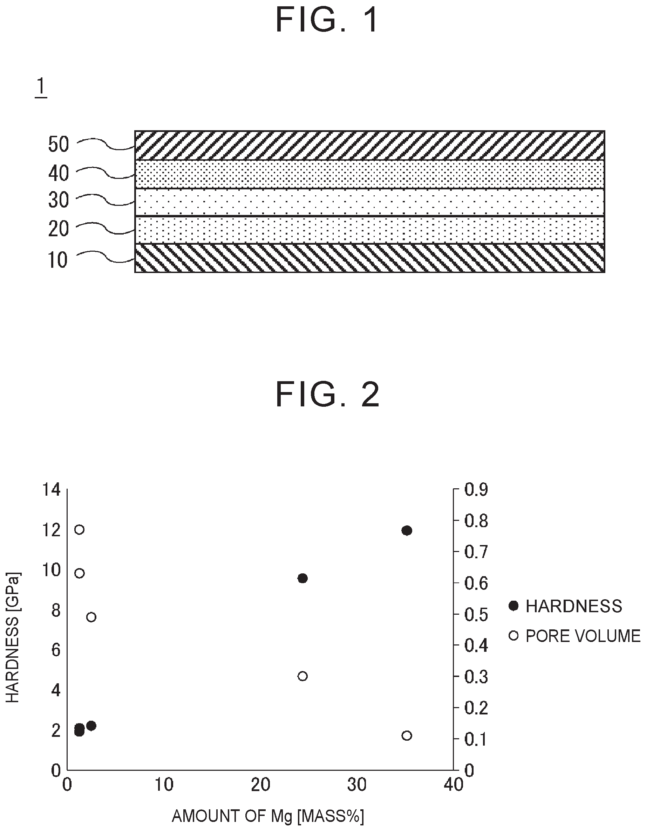

The battery of the disclosure includes the electrode active material layer of the disclosure and an electrolyte layer. As illustrated in FIG. 1, the battery 1 of the disclosure may include a negative electrode current collector layer 10, a negative electrode active material layer 20, an electrolyte layer 30, a positive electrode active material layer 40, and a positive electrode current collector layer 50 in this order. In this case, the electrode active material layer can be a negative electrode active material layer or a positive electrode active material layer. Particularly, the electrode active material layer may be a negative electrode active material layer.

The battery of the disclosure may be a liquid-based battery or a solid-state battery. Particularly, the battery may be a solid-state battery. In the disclosure, the "solid-state battery" means a battery that includes at least a solid electrolyte as an electrolyte, and therefore, a solid-state battery may include a combination of a solid electrolyte and a liquid electrolyte, as an electrolyte. The solid-state battery may also be an all-solid-state battery, that is, a battery that includes only a solid electrolyte as an electrolyte.

The battery of the disclosure may be a secondary battery. Particularly, the battery may be a lithium ion secondary battery.

The battery of the disclosure may be restrained by restraining members, such as end plates, from both sides of the layers in the stacking direction. Examples of a restraining method includes a method using a bolt tightening torque; however, the restraining method is not limited thereto.

Hereinafter, the component elements that constitute the battery of the disclosure will be described. Hereinafter, the case where the electrode active material layer of the disclosure is a negative electrode active material layer will be described.

### Negative Electrode Current Collector Layer

The negative electrode current collector layer may have a foil shape, a plate shape, a mesh shape, a punched metal shape, a foam, or the like. The negative electrode current collector layer may be a metal foil or a metal mesh, or may be a carbon sheet. Particularly, the negative electrode current collector layer may be a metal foil. The negative electrode current collector layer may be made up of a plurality of foils, sheets, or the like.

The metal that constitutes the negative electrode current collector layer is not limited. Examples of the metal include copper, nickel, chromium, gold, platinum, silver, aluminum, iron, titanium, zinc, cobalt, and stainless steel. In particular, the negative electrode current collector layer may contain at least one metal selected from among copper, nickel, and stainless steel.

To, for example, adjust the resistance, a coating layer may be formed on the surface of the negative electrode current collector layer. The negative electrode current collector layer may be formed such that the above-described metal is plated or vapor-deposited on a metal foil or a base material. When the negative electrode current collector layer is made up of a plurality of metal foils, any layer may be provided between the plurality of metal foils.

The thickness of the negative electrode current collector layer is not limited and may, for example, be greater than or equal to 0.1 µm or may be greater than or equal to 1 µm, and may be less than or equal to 1 mm or may be less than or equal to 100 µm.

### Negative Electrode Active Material Layer

The negative electrode active material layer includes the electrode composite of the disclosure. The above description can be referred to for the electrode composite of the disclosure. The negative electrode active material layer may be the electrode composite of the disclosure, formed in a layer.

The thickness of the negative electrode active material layer is not limited and may be, for example, greater than or equal to 0.1 µm and less than or equal to 1000 µm.

### Solid Electrolyte Layer

The solid electrolyte layer contains at least solid electrolyte particles and may optionally further contain a binder or the like.

The above description can be referred to for the solid electrolyte particles and the binder.

The thickness of the solid electrolyte layer is not limited and may be, for example, greater than or equal to 0.1 µm and less than or equal to 1000 µm.

### Positive Electrode Active Material Layer

The positive electrode active material layer contains at least a positive electrode active material and may optionally further contain a solid electrolyte, an electrically conductive agent, a binder, or the like.

The positive electrode active material is not limited and may be, for example, an oxide active material. Examples of the oxide active materials used in lithium ion batteries may include LiCoO₂, LiMnO₂, Li₂NiMn₃O₈, LiVO₂, LiCrO₂, LiFePO₄, LiCoPO₄, LiNiO₂, and LiNi_{1/3}Co_{1/3}Mn_{1/3}O₂. For example, a coating layer containing a Li-ion conductive oxide, such as LiNbO₃, may be formed on the surfaces of these active materials.

The content of the positive electrode active material in the positive electrode active material layer is not limited.

The above description can be referred to for the solid electrolyte, the electrically conductive agent, and the binder.

The thickness of the positive electrode active material layer is not limited and may be, for example, greater than or equal to 0.1 µm and less than or equal to 1000 µm.

### Positive Electrode Current Collector Layer

The positive electrode current collector layer may have a foil shape, a plate shape, a mesh shape, a punched metal shape, a foam, or the like. The positive electrode current collector layer may be a metal foil or a metal mesh. Particularly, the positive electrode current collector layer may be a metal foil. The positive electrode current collector layer may be made up of a plurality of foils.

The metal that constitutes the positive electrode current collector layer may be copper, nickel, chromium, gold, platinum, silver, aluminum, iron, titanium, zinc, cobalt, and stainless steel. Particularly, the positive electrode current collector layer may contain aluminum.

To, for example, adjust the resistance, a coating layer may be formed on the surface of the positive electrode current collector layer. The positive electrode current collector layer may be formed such that the above-described metal is plated or vapor-deposited on a metal foil or a base material. When the positive electrode current collector layer is made up of a plurality of metal foils, any layer may be provided between the plurality of metal foils.

The thickness of the positive electrode current collector layer is not limited and may, for example, be greater than or equal to 0.1 µm or may be greater than or equal to 1 µm, and may be less than or equal to 1 mm or may be less than or equal to 100 µm.

### Other Configuration

The battery may be the one in which the above-described constituent elements are housed inside an outer case. The outer case can adopt any known type as an outer case for batteries. A plurality of batteries may be electrically connected in any manner and stacked in any way to form a battery pack. In this case, the battery pack may be housed inside a known battery case. The battery may include obvious components, such as other necessary terminals. The shape of the battery may include, for example, a coin shape, a laminate (pouch) shape, a cylindrical shape, or a square shape.

### Manufacturing Method for Battery

The battery of the disclosure can be manufactured by a method that includes manufacturing the electrode active material layer of the disclosure.

The above description can be referred to for the method of manufacturing an electrode active material layer.

The method of manufacturing a battery according to the disclosure may further include stacking a negative electrode current collector layer, a negative electrode active material layer, a solid electrolyte layer, a positive electrode active material layer, and a positive electrode current collector layer in this order to form the electrode stack.

Other members, such as terminals, are attached to the electrode stack as needed. By housing the electrode stack in the battery case and sealing the battery stack, a battery is obtained.

### Example 1

### Synthesis of Electrode Active Material Composite Particles

### Preparation of Composite

First, 1 g of porous carbon material was placed inside the core tube of the CVD apparatus, and, after the pressure inside the core tube is reduced, the porous carbon material was heated to 500°C. Subsequently, an oxygen line was inserted into a container containing tetraethoxysilane (TEOS) to bubble oxygen through the TEOS, and the oxygen containing TEOS vapor was introduced into the core tube. By maintaining this state for six hours, a composite containing silicon dioxide (SiO₂) was prepared within the porous carbon material. The core tube was cooled, the inside of the core tube was replaced with argon gas, and then the obtained composite was collected.

### Reduction of Silicon Oxide

First, 1 g of the composite and 2.55 g of magnesium (Mg) alloy were put into a reaction vessel. Subsequently, the reaction vessel was placed in a vacuum furnace, and the inside of the vacuum furnace was evacuated with a rotary pump, the temperature was increased to 650°C over one hour, and the mixture was heated at this temperature for 10 hours. As a result, SiO₂ was reduced to prepare the electrode active material composite particles of Example 1, containing silicon (Si) and magnesium oxide (MgO) within the pores of the porous carbon material. After the vacuum furnace was cooled, the obtained electrode active material composite particles were collected. In the obtained electrode active material composite particles, voids are formed between the Si and the porous carbon material within the pores of the porous carbon material, filled with Si, and the silicon in the electrode active material composite particles becomes porous, with the result that porous silicon was produced.

### Examples 2 to 5

A part of the magnesium oxide in the collected electrode active material composite particles was removed as follows. In other words, after 1 g of electrode active material composite particle precursor and 100 mL of hydrochloric acid at each concentration listed in Table 1 were put into a beaker, the mixture was stirred for one hour. After the mixture was filtrated under reduced pressure, the filtrate was vacuum-dried. As a result, electrode active material composite particles of Examples 2 to 5 were obtained.

### Analysis

### Content of Magnesium, Measured by ICP Analysis

The content of Mg in the electrode active material composite particles of each example was measured by conducting ICP analysis in accordance with an existing method using PS3520UVDDII (manufactured by Hitachi High-Tech Science Corporation). The results are shown in Table 1.

### Hardness

The hardness of the electrode active material composite particles of each example was determined from the obtained load-displacement curve using a nanoindentation measuring device TI980 TriboIndenter (manufactured by Bruker Corporation). The results are shown in Table 1 and FIG. 2.

### Pore Volume

The pore volume of the electrode active material composite particles of each example was measured using the gas adsorption method. In other words, after an N₂ adsorption isotherm was measured, a cumulative pore size distribution and a differential pore size distribution were obtained using the Barrett-Joyner-Halenda (BJH) method, and the pore volume was determined from the obtained cumulative pore size distribution and differential pore size distribution. The results are shown in Table 1 and FIG. 2.

**Table 1**

| | Chloric Acid [mass%] | Amount of Mg [mass%] | Hardness [GPa] | Pore Volume [cc/g] |
|---|---|---|---|---|
| Example 1 | - | 35.2 | 11.93 | 0.11 |
| Example 2 | 1 | 24.4 | 9.55 | 0.30 |
| Example 3 | 35 | 2.49 | 2.20 | 0.49 |
| Example 4 | 3 | 1.29 | 2.08 | 0.63 |
| Example 5 | 10 | 1.27 | 1.91 | 0.77 |

As shown in Table 1 and FIG. 2, the content of Mg and hardness of the electrode active material composite particles, measured by ICP analysis, were approximately proportional to each other.

In contrast, the pore volume of the electrode active material composite particles with a low content of magnesium, measured by ICP analysis, sharply increased. Therefore, the pores of such composite particles are considered to be less prone to collapse because the volume is large and the hardness of the composite particles is improved because of the presence of magnesium oxide containing Mg. Therefore, in such composite particles, it is believed that the advantageous effect of mitigating the effects of expansion and contraction of silicon is particularly significant.

### Content of Mg, Measured by SEM/EDX

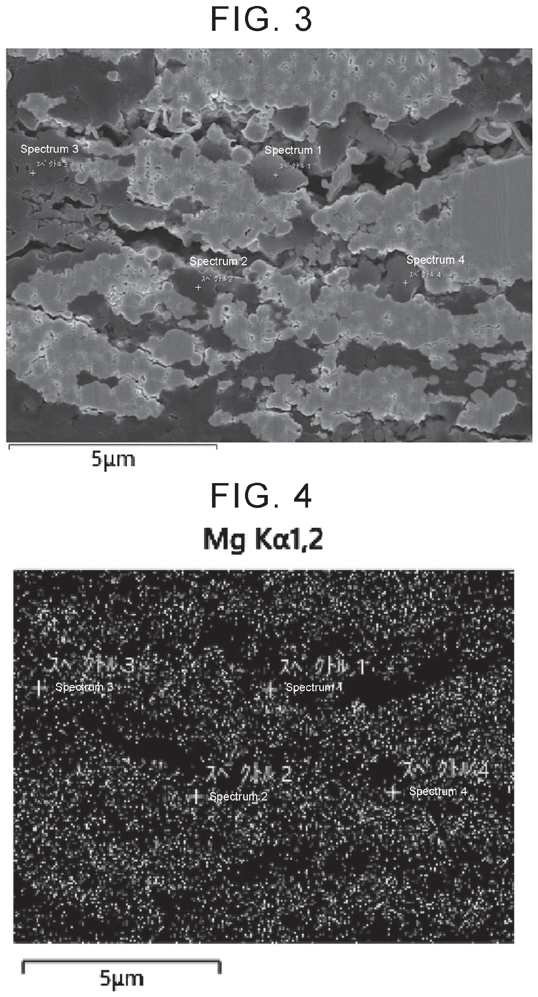

For the electrode active material composite particles of Example 1, the content of Mg was measured by SEM/EDX. In other words, a cross-sectional secondary electron image of the electrode active material composite particles was obtained using an SEM. The obtained secondary electron image was shown in FIG. 3. The secondary electron image was subjected to elemental mapping by EDX. The image obtained through this process is shown in FIG. 4. As shown in FIG. 4, the content of Mg, measured by SEM/EDX, was defined as the average value of values measured at four different points. The results are shown in Table 2.

**Table 2**

| | Spectrum 1 | Spectrum 2 | Spectrum 3 | Spectrum 4 | Spectrum 5 |
|---|---|---|---|---|---|
| Amount of Mg | 0.49 | 0.29 | 0.16 | 0.16 | 0.28 |

As shown in Table 2, the content of magnesium, measured by SEM/EDX, was within the scope of the disclosure.

## Claims

1. A manufacturing method for electrode active material composite particles, the manufacturing method comprising:
(a) contacting an alkoxysilane with a porous carbon material to prepare a composite containing silicon oxide within pores of the porous carbon material, as a contacting step; and
(b) reducing the silicon oxide in the composite using a magnesium material to produce silicon and magnesium oxide, as a reduction treatment step.

2. The manufacturing method according to claim 1, further comprising, after the reduction treatment step (b), partially removing the magnesium oxide.

3. The manufacturing method according to claim 1, wherein, in the contacting step (a), the silicon oxide is produced by chemical vapor deposition.

4. The manufacturing method according to claim 3, wherein the alkoxysilane is tetraethoxysilane.

5. An electrode active material composite particle comprising:
a porous carbon material;
silicon held within pores of the porous carbon material; and
magnesium oxide held within the pores of the porous carbon material, wherein
a content of magnesium in a plurality of the electrode active material composite particles, measured by ICP analysis, is higher than or equal to 0.5 mass%, or a content of magnesium in the plurality of electrode active material composite particles, measured by SEM-EDX, is higher than or equal to 0.15 mass%.

6. The electrode active material composite particle according to claim 5, wherein the content of magnesium in the plurality of electrode active material composite particles, measured by ICP analysis, is lower than or equal to 30.0 mass%.

7. The electrode active material composite particle according to claim 6, wherein the content of magnesium in the plurality of electrode active material composite particles, measured by ICP analysis, is lower than or equal to 10.0 mass%.

8. The electrode active material composite particle according to claim 7, wherein a hardness of the plurality of electrode active material composite particles, determined from a load-displacement curve, ranges from 1.0 GPa to 5.0 GPa.

9. The electrode active material composite particle according to claim 8, wherein a pore volume of the plurality of electrode active material composite particles, measured by a gas adsorption method, ranges from 0.40 cc/g to 1.0 cc/g.

10. The electrode active material composite particle according to claim 5, wherein the content of magnesium in the plurality of electrode active material composite particles, measured by SEM-EDX, is lower than or equal to 1.0 mass%.

11. The electrode active material composite particle according to claim 5, wherein the silicon is porous silicon.

12. An electrode active material layer (20; 40) comprising a plurality of the electrode active material composite particles according to any one of claims 5 to 11.

13. A battery (1) comprising:
the electrode active material layer (20; 40) according to claim 12; and
an electrolyte layer (30).

14. The battery (1) according to claim 13, wherein:
the battery (1) is a solid-state battery; and
the electrolyte layer (30) contains a solid electrolyte.

15. An electrode active material composite particle comprising:
a porous carbon material;
silicon held within pores of the porous carbon material; and
magnesium oxide held within the pores of the porous carbon material, wherein
a content of magnesium in a plurality of the electrode active material composite particles, measured by ICP analysis, is higher than or equal to 0.5 mass%, and a content of magnesium in the plurality of electrode active material composite particles, measured by SEM-EDX, is higher than or equal to 0.15 mass%.
